# EUROPÄISCHE PATENTSCHRIFT

(11) **EP 3 380 360 B1**
(45) Veröffentlichungstag und Bekanntmachung des Hinweises auf die Patenterteilung: **19.02.2020**
(21) Anmeldenummer: 16801254.0
(22) Anmeldetag: 25.11.2016
(51) Int. Cl.: B60N 2/70, B60N 2/68, B60N 2/02

(54) **SITZTIEFENVERSTELLER**
SEAT DEPTH ADJUSTER
DISPOSITIF DE RÉGLAGE EN PROFONDEUR D'UN SIÈGE

(30) Priorität: 27.11.2015 DE 102015223607; 20.09.2016 DE 102016218014
(43) Veröffentlichungstag der Anmeldung: 03.10.2018
(73) Patentinhaber: Adient Luxembourg Holding S.à r.l., 1855 Luxembourg (LU); Müller-Technik GmbH, 49439 Steinfeld (DE)
(72) Erfinder: GUMBRICH, Markus, 42653 Solingen (DE); KLOSTERMANN, Christian, 49451 Holdorf (DE); MADSEN, Joerg, 47495 Rheinberg (DE); GRAHL, René, 41747 Viersen (DE); BRUNNER, Ralph, 47829 Krefeld (DE); OSTERHUES, André, 49439 Steinfeld-Mühlen (DE)
(74) Vertreter: Liedtke & Partner Patentanwälte
(86) Internationale Anmeldenummer: PCT/EP2016/078818
(87) Internationale Veröffentlichungsnummer: WO 2017/089542

(56) Entgegenhaltungen:
- DE-B4-102006 018 353
- DE-U1- 20 106 560

## Beschreibung

Die Erfindung betrifft einen Sitztiefenversteller für einen Fahrzeugsitz.

Aus der DE 10 2006 018 353 B4 ist eine Vorrichtung zur Verstellung der Sitztiefe eines Fahrzeugsitzes mit einer Sitzwanne bekannt, an welcher ein Sitztiefenversteller entlang von Schienenelementen geführt ist, wobei ein Betätigungsgriff vorgesehen ist, über den der Sitztiefenversteller freigebbar ist. Dabei weist ein Schienenelement eine Rastverzahnung auf, in welche ein Rasthaken mit Rastelementen eingreift.

In der DE 201 06 560 U1 wird ein motorisch verstellbarer Sitz-Liegesesselbeschlag beschrieben. Der Sitz-Liegesesselbeschlag zur motorischen Neigungsverstellung einer Rückenlehne und zum motorischen Aus- und Einfalten einer zweiteiligen Beinstütze ist vollständig zwischen zwei mit Traversen verbundenen Seitenplatinen werksseitig vormontiert, an denen jeweils eine Seitenwand mit einer Armlehne zu befestigen ist. An jeder Seitenplatine sind Sitzbeschlaglenker angelenkt, an denen ein Montagewinkel zur Befestigung eines Sitzrahmens, über dessen Länge er sich annähernd erstreckt, angelenkt ist. Die Beinstützenteile sind mit Stützen-Scherenlenkern direkt oder indirekt als Stützenbeschlaglenker angelenkt, die an Winkelstücken jeweils die Beinstützen tragen. An dem Montagewinkel ist direkt oder indirekt eine Montageplatte zum Halten eines Rückenlehnenrahmens angelenkt. Zwischen den beidseitigen Montageplatten ist ein Rückenlehnenquerholm angeordnet. Zwischen den beiderseitigen Montagewinkeln ist ein Sitzquerholm angeordnet. Zwischen diesem und dem Rückenlehnenquerholm erstreckt sich ein Antriebsglied eines Rückenlehnenverstellmotors. Zwischen den beiden Scherenlenkern erstreckt sich ein Scherenquerholm, zwischen dem und einer der Traversen sich ein Antriebsglied eines Beinstützenantriebsmotors erstreckt.

Aufgabe der vorliegenden Erfindung ist es, einen gegenüber dem Stand der Technik verbesserten Sitztiefenversteller für einen Fahrzeugsitz, zur Sitztiefenverstellung einer Sitzfläche des Fahrzeugsitzes, anzugeben.

Die Aufgabe wird erfindungsgemäß gelöst durch einen Sitztiefenversteller mit den Merkmalen des Anspruchs 1.

Ein erfindungsgemäßer Sitztiefenversteller für einen Fahrzeugsitz, insbesondere zur Sitztiefenverstellung einer Sitzfläche des Fahrzeugsitzes, umfasst eine mit einer Sitzstruktur des Fahrzeugsitzes verbindbare Grundplatte mit einer Rasteinheit und eine oberhalb der Grundplatte angeordnete und relativ zur Grundplatte verschiebbare Trägerplatte. D. h. die Trägerplatte ist insbesondere entlang einer Verschieberichtung und somit zweckmäßigerweise entlang einer Längsrichtung von Führungsbahnen längsbeweglich. Der Sitztiefenversteller umfasst des Weiteren eine in der Rasteinheit lösbar rastende Verriegelungseinheit und eine in die Verschieberichtung, d. h. in die Längsrichtung, auf die Trägerplatte wirkende Antriebseinheit. Die Trägerplatte ist in einer Raststellung der Verriegelungseinheit zur Grundplatte fixiert und in einer Losestellung der Verriegelungseinheit zwischen einer eingefahrenen Position und einer ausgefahrenen Position beweglich, d. h. verschiebbar. Die Antriebseinheit ist derart ausgebildet und angeordnet, dass sie in der Losestellung der Verriegelungseinheit eine Verschiebung, d. h. eine Längsbewegung, der Trägerplatte in die ausgefahrene Position bewirkt. Die Rasteinheit ist auf der der Trägerplatte zugewandten Oberseite der Grundplatte angeordnet und weist in Verschieberichtung versetzte Rastaufnahmen auf. Die Verriegelungseinheit weist einen Entriegelungshebel mit mindestens einem Verriegelungszahn auf, der in der Raststellung rastend in eine der Rastaufnahmen eingreift. Der Entriegelungshebel ist zweckmäßigerweise an der Trägerplatte angeordnet und bewegt sich somit mit der Trägerplatte mit.

Der erfindungsgemäße Sitztiefenversteller umfasst somit die Grundplatte und die zu der Grundplatte relativ bewegbare Trägerplatte, wobei die Trägerplatte und die Grundplatte in einer eingefahrenen Position zweckmäßigerweise weitgehend parallel übereinander angeordnet und lösbar miteinander verriegelt sind und wobei nach einer Entriegelung der Trägerplatte diese relativ zur Grundplatte selbsttätig von der eingefahrenen Position in eine ausgefahrene Position bewegbar ist. Auf der Trägerplatte ist zweckmäßigerweise die Sitzfläche oder zumindest ein Teil der Sitzfläche angeordnet, welche bzw. welcher somit durch die Bewegung der Trägerplatte sitztiefenverstellbar ist, d. h. die Trägerplatte und somit die Sitzfläche oder zumindest ein Teil der Sitzfläche sind in Richtung einer Sitzlehne des Fahrzeugsitzes oder in eine entgegengesetzte Richtung, d. h. von der Sitzlehne weg, bewegbar. Dabei wird die Bewegung von der Sitzlehne weg, d. h. in die ausgefahrene Position, durch die Antriebseinheit unterstützt. Diese Bewegung in die ausgefahrene Position erfolgt bei einem in Fahrtrichtung in einem Fahrzeug ausgerichteten Fahrzeugsitz in Fahrtrichtung, d. h. in X-Richtung eines dreidimensionalen Koordinatensystems.

Ein erfindungsgemäßer Fahrzeugsitz umfasst einen solchen Sitztiefenversteller.

Die mit der Erfindung erzielten Vorteile bestehen insbesondere darin, dass ein Benutzer nur durch eine Entriegelung der an der Sitzfläche befestigten Trägerplatte die Sitztiefe der Sitzfläche einfach und schnell vergrößern kann. Durch die erfindungsgemäße Anordnung der Rasteinheit und der Verriegelungseinheit, insbesondere durch eine dadurch ermöglichte Entriegelung durch eine Bewegung des Entriegelungshebels derart, dass der zumindest eine Verriegelungszahn nach oben aus der jeweiligen Rastaufnahme herausbewegt wird und zum Verriegeln nach unten in die jeweilige Rastaufnahme hineinbewegt wird, wird eine sichere Verrastung, d. h. eine sichere Verriegelung des Sitztiefenverstellers und insbesondere ein verbessertes Verhalten in Unfallsituationen eines Fahrzeugs erreicht, in welchem ein Fahrzeugsitz mit einem solchen Sitztiefenversteller angeordnet ist. Insbesondere wird dadurch die Gefahr einer unfallbedingten unkontrollierten und nicht beabsichtigten Entriegelung und einer daraus resultierenden unkontrollierten und nicht beabsichtigten Sitztiefenverstellung während des Unfalls, verbunden mit entsprechenden Verletzungsrisiken eines Fahrzeuginsassen auf dem Fahrzeugsitz, erheblich reduziert. Im Gegensatz zur erfindungsgemäßen Lösung besteht bei dem aus dem Stand der Technik bekannten Sitztiefenversteller durch die seitliche Anordnung der Rasteinheit und Verriegelungseinheit und durch die daraus resultierende seitliche, d. h. horizontale, Bewegung zum Verriegeln und Entriegeln insbesondere bei Seitenaufprallunfällen ein im Vergleich zur erfindungsgemäßen Lösung höheres Risiko einer insbesondere unkontrollierten und nicht beabsichtigten unfallbedingten Entriegelung und einer daraus resultierenden unkontrollierten und nicht beabsichtigten Sitztiefenverstellung während des Unfalls.

Um das Entriegeln durch Bewegen des zumindest einen Verriegelungszahns nach oben aus der jeweiligen Rastaufnahme heraus und das Verriegeln durch Bewegen des zumindest einen Verriegelungszahns nach unten in die jeweilige Rastaufnahme hinein zu ermöglichen, sind die Rastaufnahmen erfindungsgemäß nach oben geöffnet und der zumindest eine Verriegelungszahn ist erfindungsgemäß nach unten ausgerichtet. D. h. der Verriegelungszahn ist derart am Entriegelungshebel angeordnet, dass ein freies Ende des zumindest einen Verriegelungszahns unterhalb dem anderen, gegenüberliegenden Endbereich des Verriegelungszahns angeordnet ist, mit welchem der Verriegelungszahn am Entriegelungshebel, zweckmäßigerweise in einem Endbereich des Entriegelungshebels, angeordnet oder ausgebildet ist.

Zweckmäßigerweise umfasst der Sitztiefenversteller zumindest ein Rückstellelement, das auf die Verriegelungseinheit zur Raststellung hin einwirkt. Dieses Rückstellelement wirkt zweckmäßigerweise direkt auf den Entriegelungshebel ein. Mittels des Rückstellelements ist der Entriegelungshebel in der verriegelten Position gehalten, insbesondere gedrückt. Beispielsweise ist das Rückstellelement als eine Feder ausgebildet, insbesondere als eine Druckfeder oder beispielsweise als eine Zugfeder. Das Rückstellelement wirkt zweckmäßigerweise direkt auf den Endbereich des Entriegelungshebels ein, an welchem der zumindest eine Verriegelungszahn angeordnet oder ausgebildet ist. Durch diese direkte Einwirkung auf den Entriegelungshebel wird die sichere Verrastung des zumindest einen Verriegelungszahns in der jeweiligen Rastaufnahme sichergestellt und somit insbesondere eine unbeabsichtigte Sitztiefenverstellung vermieden. Dabei wird durch die direkte Einwirkung auf den Entriegelungshebel eine Toleranzkette verkürzt. Bei einer Einwirkung des Rückstellelementes auf andere, mit dem Entriegelungshebel verbundene Komponenten und über diese nur indirekt auf den Entriegelungshebel könnten sich Toleranzen ergeben, die sich aufsummieren, und zudem wäre dann eine umständliche Kraftweiterleitung erforderlich so dass die Gefahr bestünde, dass die Krafteinwirkung des Rückstellelementes aufgrund dieser Toleranzen und der umständlichen Kraftweiterleitung bis zum Entriegelungshebel nicht mehr ausreicht, um den Verriegelungszahn sicher in der verriegelten Stellung in der jeweiligen Rastaufnahme zu halten. Dies wird durch die direkte Einwirkung des Rückstellelementes auf den Entriegelungshebel vermieden.

Der Entriegelungshebel ist zweckmäßigerweise mit einer Betätigungseinheit gekoppelt, über welche er betätigbar und dadurch zwischen der Raststellung und der Losestellung bewegbar ist. Besonders bevorzugt ist der Entriegelungshebel mit der Betätigungseinheit direkt gekoppelt, d. h. ohne weitere dazwischen angeordnete Komponenten zur Kraftweiterleitung von der Betätigungseinheit auf den Entriegelungshebel. Beispielsweise ist der Entriegelungshebel mit der Betätigungseinheit gelenkig gekoppelt und dadurch zwischen der Raststellung und der Losestellung bewegbar. Durch diese insbesondere direkte Kopplung ist der Sitztiefenversteller besonders einfach ausgebildet. Es wird eine direkte Entriegelung ermöglicht und eine aufwändige Hebelumlenkung über mehrere zwischen dem Entriegelungshebel und der Betätigungseinheit angeordnete Komponenten vermieden. Dadurch sind zudem weniger Bauteile erforderlich. Durch die geringe Anzahl von Bauteilen, beispielsweise ist lediglich der Entriegelungshebel und die auf diesen zum Betätigen, d. h. insbesondere zum Entriegeln, einwirkende Betätigungseinheit erforderlich, wird eine geringe Toleranzkette erreicht und somit eine feine Abstimmung der ineinander eingreifenden Bauteile, d. h. der zur Entriegelung und Verriegelung zusammenwirkenden Komponenten, ermöglicht. Zudem weist der Sitztiefenversteller durch die verringerte Bauteilanzahl ein entsprechend geringeres Gewicht und ein entsprechend geringeres Bauraumerfordernis auf und die Kosten für den Sitztiefenversteller sind reduziert.

Die Betätigungseinheit und der Entriegelungshebel sind zweckmäßigerweise derart ausgebildet und angeordnet, dass die Betätigungseinheit zum Bewegen des Entriegelungshebels auf einen vom zumindest einen Verriegelungszahn abgewandten Endbereich des Entriegelungshebels einwirkt. Dadurch werden die direkte Betätigung des Entriegelungshebels und eine optimale Hebelwirkung erreicht.

Der Entriegelungshebel ist zweckmäßigerweise um eine Achse schwenkbar gelagert. Durch die Einwirkung der Betätigungseinheit zum Entriegeln wird somit der vom zumindest einen Verriegelungszahn abgewandte Endbereich des Entriegelungshebels im Wesentlichen nach unten gedrückt, wodurch der Entriegelungshebel um die Achse schwenkt und der andere Endbereich des Entriegelungshebels mit dem zumindest einen Verriegelungszahn nach oben aus der jeweiligen Rastaufnahme herausgeschwenkt wird.

Die Betätigungseinheit, beispielsweise der Betätigungsgriff, ist beispielsweise derart schwenkbar gelagert, dass dessen Einwirkung auf den Entriegelungshebel in Form einer Ellipsenführung erfolgt. Die Entriegelung erfolgt dadurch in einer zwangsgeführten Kurvenbahn.

Der Hauptvorteil der beschriebenen Verriegelung des Sitztiefenverstellers, welche nach oben, d. h. durch Bewegen des zumindest einen Verriegelungszahns nach oben aus der jeweiligen Rastaufnahme heraus, entriegelt wird und nach unten, d. h. durch Bewegen des zumindest einen Verriegelungszahns nach unten in die jeweiligen Rastaufnahme hinein, wieder verriegelt wird, ist das optimierte Verhalten während eines Unfalls, d. h. während einer Kollision des Fahrzeugs mit einem Hindernis. Besonders bevorzugt sind der zumindest eine Verriegelungszahn und die Rastaufnahmen derart ausgebildet, beispielsweise durch einen einseitigen Hinterschnitt, dass ein selbsttätiges Entriegeln und ein Einfahren des Sitztiefenverstellers, d. h. ein Verschieben der Trägerplatte in die eingefahrene Position, ermöglicht wird, jedoch ausschließlich in die eingefahrene Position. D. h. würde die Trägerplatte in die entgegengesetzte Richtung bewegt, würde der zumindest eine Verriegelungszahn sofort wieder verrasten. Da somit beispielsweise während eines Unfalls ein selbsttätiges beabsichtigtes und kontrolliertes Verschieben der Trägerplatte in die eingefahrene Position ermöglicht wird und ein unbeabsichtigtes und unkontrolliertes Verschieben in die ausgefahrene Position verhindert wird, ist ein Verletzungsrisiko reduziert. Der zumindest eine Verriegelungszahn und die Rastaufnahmen weisen somit zweckmäßigerweise eine derartige Verzahnungsgeometrie auf und der Sitztiefenversteller ist zweckmäßigerweise derart ausgebildet, dass insbesondere bei einer Heckkollision aufgrund einer daraus resultierenden definierten Krafteinleitung über den Fahrzeuginsassen das beabsichtigte und kontrollierte selbsttätige Entriegeln und Einfahren des Sitztiefenverstellers, d. h. das beabsichtigte und kontrollierte Verschieben der Trägerplatte in die eingefahrene Position, ermöglicht wird. Dies ist bei dem aus dem Stand der Technik bekannten Sitztiefenversteller, welcher die seitliche Anordnung der Rasteinheit und Verriegelungseinheit und die daraus resultierende seitliche, d. h. horizontale, Bewegung zum Verriegeln und Entriegeln aufweist, nicht vorgesehen und auch nicht möglich.

Durch die oben beschriebene Anordnung des Entriegelungshebels an der Trägerplatte und somit insbesondere oberhalb der Grundplatte ist beispielsweise eine Reparatur oder Demontage auf besonders einfache Weise möglich. Beispielsweise ist hierzu lediglich das Sitzteil von der Trägerplatte zu entfernen. Der Entriegelungshebel ist beispielsweise zumindest teilweise in einer Ausnehmung in der Trägerplatte angeordnet und daher von oben, d. h. von einer Oberseite der Trägerplatte aus, zugänglich und kann dadurch einfach demontiert oder repariert werden, zum Beispiel bei einem Verschleiß des Verriegelungszahns. Beispielsweise ist der Entriegelungshebel an der Oberseite der Trägerplatte angeordnet und der zumindest eine Verriegelungszahn schwenkt durch die Ausnehmung in der Trägerplatte hindurch. Beispielsweise schwenken dabei auch Bereiche des Entriegelungshebels durch diese Ausnehmung hindurch. Der Entriegelungshebel kann auch in der Ausnehmung angeordnet sein und im verriegelten Zustand mit dem Endbereich, an dem der zumindest eine Verriegelungszahn angeordnet ist, nach unten in Richtung der Grundplatte ausgerichtet sein und zum Entriegeln nach oben in die Ausnehmung der Trägerplatte hineinschwenken. In einer anderen Ausführungsform kann der Entriegelungshebel auch an einer der Grundplatte zugewandten Unterseite der Trägerplatte angeordnet sein. Dann ist es zur Demontage oder Reparatur des Entriegelungshebels beispielsweise erforderlich, die Trägerplatte von der Grundplatte abzunehmen.

Durch die oben beschriebene direkte Einwirkung der Betätigungseinheit auf den Entriegelungshebel wird eine Haptik, d. h. ein Betätigungsgefühl während des Entriegelns, verbessert. Es ist eine komfortable kundenfreundliche Feinabstimmung hinsichtlich eines Entriegelungsdruckpunktes möglich. Es ist eine sichere, komfortable und einfache Bedienung ermöglicht. Die Verriegelung und insbesondere auch die Entriegelung erfordern nur einen geringen Kraftaufwand. Es ist eine einfache Montage ermöglicht und nur ein geringer Materialaufwand erforderlich.

Die Antriebseinheit umfasst zweckmäßigerweise mindestens ein Federelement, das zwischen der Grundplatte und der Trägerplatte gespannt ist. D. h. in einer möglichen Ausführungsform sind die Grundplatte und die Trägerplatte in der eingefahrenen Position mittels mindestens eines Antriebselements, insbesondere eines Federelements, vorgespannt, zueinander gehalten und verriegelt. Durch Entriegelung der Trägerplatte von der Grundplatte wird das Antriebselement gelöst und bewegt die Trägerplatte relativ zur Grundplatte selbsttätig in die ausgefahrene Position. Insbesondere wird bei einer als Federelement ausgebildeten Antriebseinheit diese entspannt. Dabei können ein oder mehrere Federelemente als Antriebseinheit vorgesehen sein. Das Federelement ist beispielsweise eine Zugfeder. Alternativ kann das Federelement eine Druckfeder sein.

Der Sitztiefenversteller weist einen einfachen Aufbau auf.

Er umfasst die Grundplatte und die zu der Grundplatte relativ bewegbare Trägerplatte, wobei die Grundplatte an der Sitzstruktur befestigt oder befestigbar ist. Zur Positionierung der Grundplatte an der Sitzstruktur umfasst der Sitztiefenversteller vorzugsweise zumindest zwei Dome, welche zweckmäßigerweise an der Unterseite der Grundplatte vertikal abstehen. Die Dome sind zweckmäßigerweise korrespondierend zur Sitzstruktur ausgebildet und an der Grundplatte positioniert. Eine spielfreie Befestigung erfolgt zweckmäßigerweise durch eine nachträgliche Befestigung von Grundplatte und Sitzstruktur beispielsweise mittels einer Schraubenbefestigung. Hierzu weist die Grundplatte zweckmäßigerweise Durchgangsbohrungen zur Aufnahme von Befestigungselementen, beispielsweise Schrauben, zur Fixierung der Grundplatte an der Sitzstruktur auf.

In einem Verfahren zur Montage des Sitztiefenverstellers wird in einem ersten Schritt die Grundplatte in einer vertikalen Z-Richtung auf die Sitzstruktur aufgesetzt und mittels der Dome vorpositioniert und in einem zweiten Schritt wird die Grundplatte mit den Befestigungselementen an der Sitzstruktur fixiert. Die Dome, welche zweckmäßigerweise Quetschrippen aufweisen, ermöglichen eine einfache, schnelle, präzise und spielfreie Vorpositionierung zur anschließenden Verschraubung. Dadurch werden ein Montageablauf optimiert und eine Montagezeit reduziert. Die oben genannte Z-Richtung bezieht sich auf ein dreidimensionales Koordinatensystem. Bei einem bereits im Fahrzeug positionierten Fahrzeugsitz entspricht dies der Richtung einer Hochachse des Fahrzeugs, während die X-Richtung der Richtung einer Längsachse des Fahrzeugs und somit der Fahrtrichtung und die Y-Richtung der Richtung einer Querachse des Fahrzeugs entspricht, wenn der Fahrzeugsitz in Fahrtrichtung positioniert ist.

Ausführungsbeispiele der Erfindung werden anhand von Zeichnungen näher erläutert. Dabei zeigen:
- Figur 1: schematisch in Explosionsdarstellung einen Sitztiefenversteller,
- Figuren 2A, 2B: schematisch in perspektivischer Darstellung in Draufund in Unteransicht eine Trägerplatte mit Betätigungsgriff,
- Figur 3: in perspektivischer Darstellung eine Grundplatte,
- Figur 4: schematisch in Schnittdarstellung einen Sitztiefenversteller im verriegelten Zustand und im eingefahrenen Zustand,
- Figur 5: schematisch in Schnittdarstellung einen Sitztiefenversteller im entriegelten Zustand und im eingefahrenen Zustand im Bereich eines Betätigungsgriffes,
- Figur 6: schematisch in Schnittdarstellung einen Sitztiefenversteller im entriegelten Zustand und im eingefahrenen Zustand im Bereich eines Federelementes,
- Figur 7: schematisch in Schnittdarstellung einen Sitztiefenversteller im entriegelten Zustand und im ausgefahrenen Zustand im Bereich eines Federelementes, und
- Figuren 8A bis 8H: schematisch den Montageablauf für einen Sitztiefenversteller,
- Figuren 9 und 10: schematisch einen teilmontierten Sitztiefenversteller mit Trägerplatte und daran montierter Betätigungseinheit bzw. daran montierter Grundplatte,
- Figuren 11 und 12: schematisch eine teilmontierte Grundplatte an einer Sitzstruktur, und
- Figur 13: schematisch eine weitere Darstellung eines Sitztiefenverstellers.

Einander entsprechende Teile sind in allen Figuren mit den gleichen Bezugszeichen versehen.

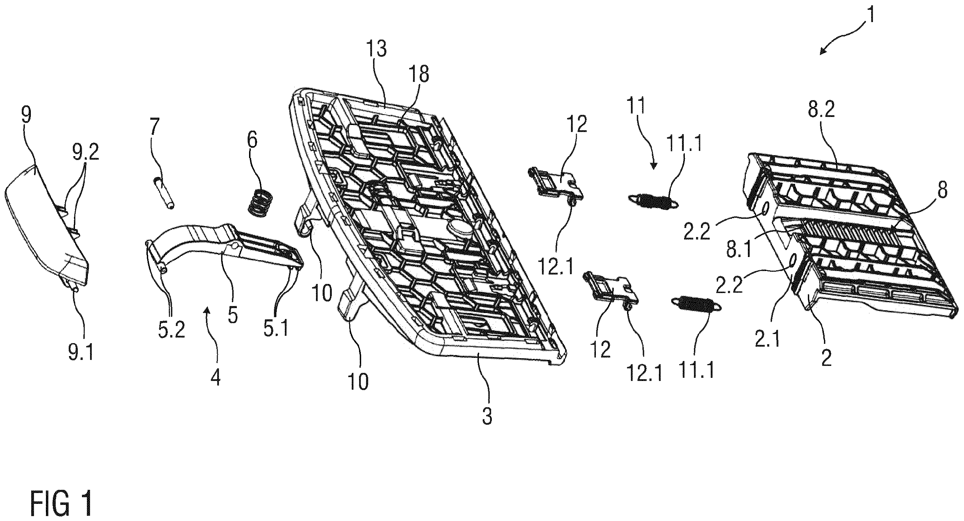

**Figur 1** zeigt schematisch in Explosionsdarstellung einen Sitztiefenversteller 1 für eine Sitzfläche eines Fahrzeugsitzes. Der Sitztiefenversteller 1 dient dabei einer Verlängerung oder Verkürzung der Sitzfläche des Fahrzeugsitzes.

Hierzu umfasst der Sitztiefenversteller 1 eine Grundplatte 2 und eine relativ zur Grundplatte 2 bewegbare, insbesondere verschiebbare, Trägerplatte 3. Die Trägerplatte 3 und die Grundplatte 2 sind lösbar miteinander verriegelbar. Hierzu umfasst der Sitztiefenversteller 1 eine Verriegelungseinheit 4.

Die Verriegelungseinheit 4 umfasst zumindest einen Entriegelungshebel 5. Der Entriegelungshebel 5 ist in Form einer Wippe, die um eine Achse 7 drehbar gelagert ist, ausgebildet. Darüber hinaus umfasst die Verriegelungseinheit 4 zumindest ein Rückstellelement 6. Mittels des Rückstellelements 6 ist der Entriegelungshebel 5 in einer verriegelten Position gehalten, insbesondere gedrückt. Hierzu ist das Rückstellelement 6 in Form einer Druckfeder ausgebildet.

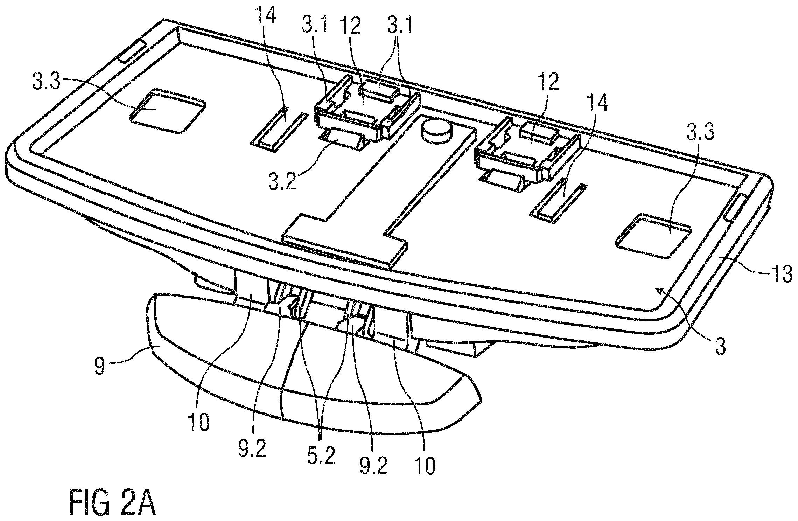

Zur Verriegelung des Entriegelungshebels 5 in der verriegelten Position umfasst dieser mindestens einen Verriegelungszahn 5.1, der in eine Rasteinheit 8 in der Grundplatte 2 rastend eingreift. Im gezeigten Ausführungsbeispiel gemäß Figur 1 umfasst der Entriegelungshebel 5 zwei Verriegelungszähne 5.1, von denen mindestens einer in eine Rastaufnahme 8.1, beispielsweise in eine Rastnut, der Rasteinheit 8 rastend eingreift. In den anderen Ausführungsbeispielen, beispielsweise gemäß den Figuren 2A bis 8C, umfasst der Entriegelungshebel 5 beispielsweise nur einen Verriegelungszahn 5.1.

Zur Betätigung des Sitztiefenverstellers 1 ist eine Betätigungseinheit 9 vorgesehen. Die Betätigungseinheit 9 ist als ein Hebel oder Griff ausgeführt, der beispielsweise mittels Zapfen 9.1 schwenkbar an einer Lagerung 10 der Trägerplatte 3 gelagert ist.

Die Grundplatte 2 weist darüber hinaus eine Verrippung 8.2 auf.

Die Betätigungseinheit 9 ist darüber hinaus schwenk- und bewegbar mit dem Entriegelungshebel 5 zu dessen Betätigung, insbesondere Entriegelung des Sitztiefenverstellers 1, gekoppelt. Hierzu umfasst die Betätigungseinheit 9 Arme 9.2, die mit Hebelenden 5.2, welche vom Verriegelungszahn 5.1 oder von den Verriegelungszähnen 5.1 abgewandt sind, gelenkig gekoppelt sind. In den Ausführungsbeispielen gemäß den Figuren 2A bis 9 sind diese Hebelenden 5.2 gabelförmig ausgebildet, d. h. es ist ein sich gabelförmig aufspreizendes vom zumindest einen Verriegelungszahn 5.1 abgewandtes Hebelende 5.2 ausgebildet.

Im zusammengebauten Zustand sind die Grundplatte 2 und die Trägerplatte 3 in einer eingefahrenen Position übereinander angeordnet und mittels der Verriegelungseinheit 4 verriegelt. Zur Entriegelung der Trägerplatte 3 von der Grundplatte 2 wird die Betätigungseinheit 9 betätigt und die Verriegelungseinheit 4 gelöst.

Zum selbsttätigen Ausfahren der Trägerplatte 3 relativ zur Grundplatte 2 nach Entriegelung der Verriegelungseinheit 4 umfasst der Sitztiefenversteller 1 eine Antriebseinheit 11. Die Antriebseinheit 11 ist beispielsweise als ein oder mehrere Federelement/e 11.1 ausgebildet. Insbesondere ist die Antriebseinheit 11 als eine Zugfeder ausgebildet, die im eingefahrenen Zustand der Trägerplatte 3 diese gegenüber der Grundplatte 2 in einem vorgespannten Zustand hält. Nach Entriegelung der Verriegelungseinheit 4 entspannt die Zugfeder und fährt, insbesondere zieht die Trägerplatte 3 nach vorne über die Grundplatte 2 hinaus.

In einer alternativen Ausführungsform kann anstelle einer Zugfeder eine Druckfeder vorgesehen sein.

Des Weiteren umfasst der Sitztiefenversteller 1 zwei Schubelemente 12, mittels welcher die Trägerplatte 3 an einer Sitzstruktur 17 des Fahrzeugsitzes verschiebbar befestigbar ist.

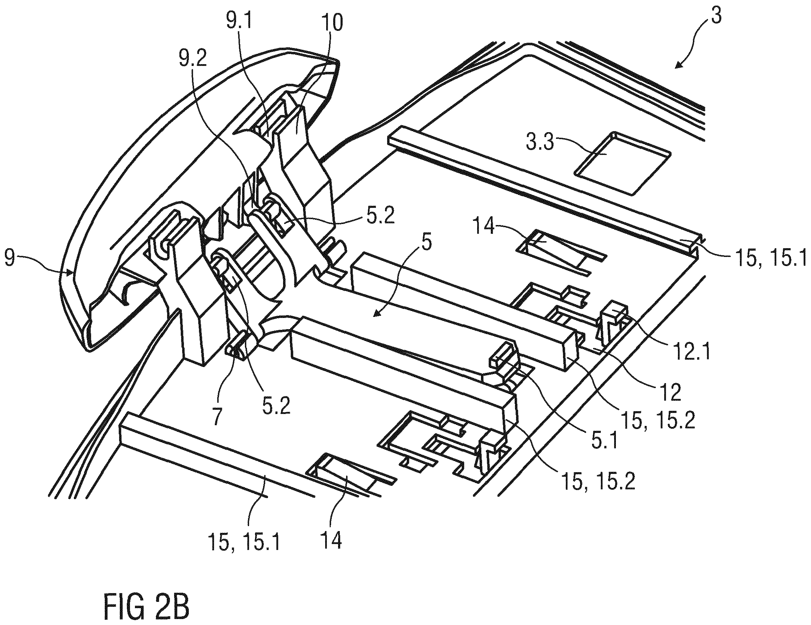

**Figuren 2A** **und** **2B** zeigen schematisch in perspektivischer Darstellung in Drauf- und in Unteransicht eine Trägerplatte 3 mit einer als Betätigungsgriff ausgebildeten Betätigungseinheit 9, die mit dem Entriegelungshebel 5 schwenk- und bewegbar in Art einer Gelenkkopplung gekoppelt ist.

Die Schubelemente 12 sind an der Trägerplatte 3 fixiert. Beispielsweise sind die Schubelemente 12 mittels Klemmen 3.1 an der Trägerplatte 3 fixiert, wie in Figur 2A dargestellt. Zur einfachen Montage der Schubelemente 12 sind je Schubelement 12 drei Klemmen 3.1 vorgesehen, die das Schubelement 12 von drei Seiten sowie nach oben fixieren. Zur offenen Seite ist jeweils ein Anschlag 3.2 vorgesehen, der ein Lösen der in die Klemmen 3.1 eingesetzten Schubelemente 12 verhindert.

Die Trägerplatte 3 weist einen umlaufenden Rand 13 auf. Des Weiteren weist die Trägerplatte 3 zwei Ausnehmungen 3.3 auf. Zusätzlich kann die Trägerplatte 3, wie in Figur 1 gezeigt, oberflächenseitig eine Rippenstruktur 18 aufweisen.

Der Entriegelungshebel 5 weist in Richtung der Betätigungseinheit 9 gabelförmige Hebelenden 5.2 auf, in welche Arme 9.2 der Betätigungseinheit 9 eingreifen und gelenkig miteinander gekoppelt, insbesondere dreh- und schwenkbar miteinander gekoppelt sind. Der vom zumindest einen Verriegelungszahn 5.1 abgewandte Endbereich, hier mit den beiden gabelförmigen Hebelenden 5.2, ist zweckmäßigerweise gegenüber dem anderen Endbereich des Entriegelungshebels 5, an welchem der zumindest eine Verriegelungszahn 5.1 positioniert ist, abgewinkelt, insbesondere in Richtung eines Bewegungspfeils B abgewinkelt, so dass ein einfacheres Koppeln des Entriegelungshebels 5 mit der Betätigungseinheit 9 und eine einfachere Betätigungsbewegung der Betätigungseinheit 9 und deren Übertragung auf den Entriegelungshebel 5 ermöglicht ist.

In Figur 2B sind die von den Schubelementen 12 vertikal abstehenden Haken 12.1 dargestellt, welche durch die Trägerplatte 3 nach unten durchragen. An den Haken 12.1 wird ein Ende des jeweiligen Federelementes 11.1 befestigt.

Des Weiteren weist die Trägerplatte 3 nach unten weisende Anschlagarme 14 auf. Die Anschlagarme 14 können flexibel und in Form von Rasthaken ausgestaltet sein. Darüber hinaus können die Anschlagarme 14 in einer vorgegebenen Position rastend eingreifen. Ferner weist die Trägerplatte 3 an ihrer Unterseite eine Anzahl von Führungselementen 15 auf. Die zwei äußeren Führungselemente 15.1 sind als L-Profile ausgebildet. Die zwei inneren Führungselemente 15.2 sind als Vierkantprofile ausgebildet.

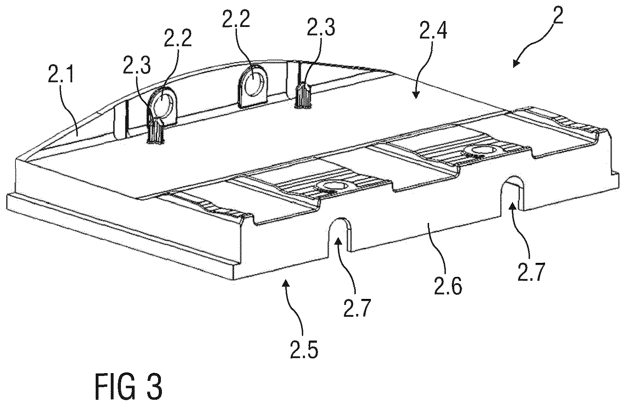

**Figur 3** zeigt in perspektivischer Darstellung in einer Unteransicht eine Ausführungsform für eine Grundplatte 2. Die Grundplatte 2 weist an ihrer Unterseite 2.4 zur Befestigung an einer Sitzstruktur 17 eine vertikal abstehende Wand 2.1 mit zwei Durchgangsbohrungen 2.2 auf. Die Durchgangsbohrungen 2.2 dienen der Aufnahme von Befestigungsmitteln, wie Schrauben, Nieten oder Klemmen.

Zur Vorpositionierung der Grundplatte 2 an der Sitzstruktur 17 umfasst die Grundplatte 2 auf der Unterseite 2.4 zwei vertikal abstehende Dome 2.3.

Auf der zur Unterseite 2.4 gegenüberliegenden Oberseite 2.5 weist die Grundplatte 2 zumindest bereichsweise einen vertikal abstehenden Rand 2.6 auf. Der zur Wand 2.1 auf der Unterseite 2.4 gegenüberliegende Rand 2.6 auf der Oberseite 2.5 weist zwei Aussparungen 2.7 auf. Im zusammengebauten Zustand sind durch diese Aussparungen 2.7 die Haken 12.1 geführt.

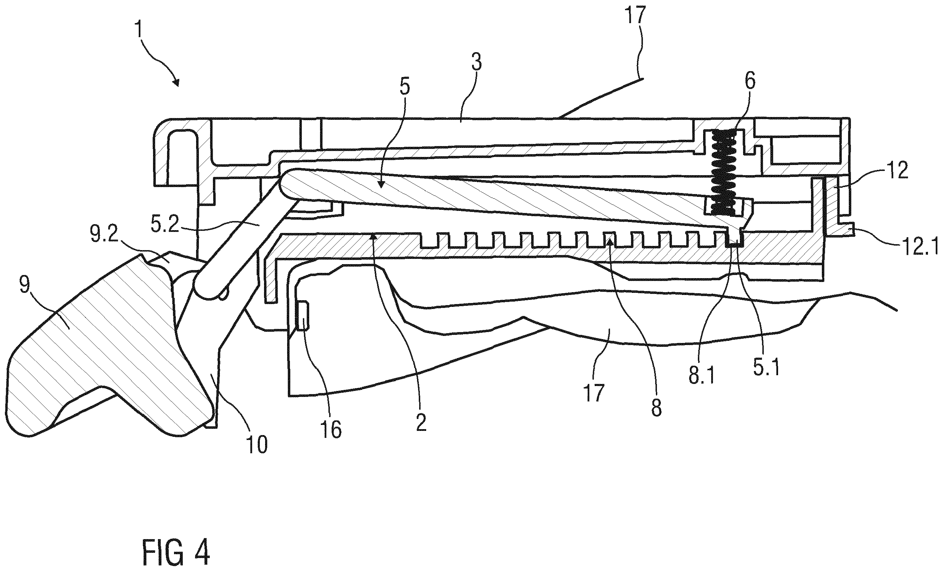

**Figur 4** zeigt schematisch in Schnittdarstellung den Sitztiefenversteller 1 im verriegelten Zustand und im eingefahrenen Zustand. Der Sitztiefenversteller 1 ist mittels Schrauben 16 an einer Sitzstruktur 17 befestigt. In diesem eingefahrenen Zustand sind die Grundplatte 2 und die Trägerplatte 3 übereinander angeordnet. Der Entriegelungshebel 5 ist mittels des Rückstellelementes 6 in einer verriegelten Position in einer der Rastaufnahmen oder -nuten 8.1 gehalten.

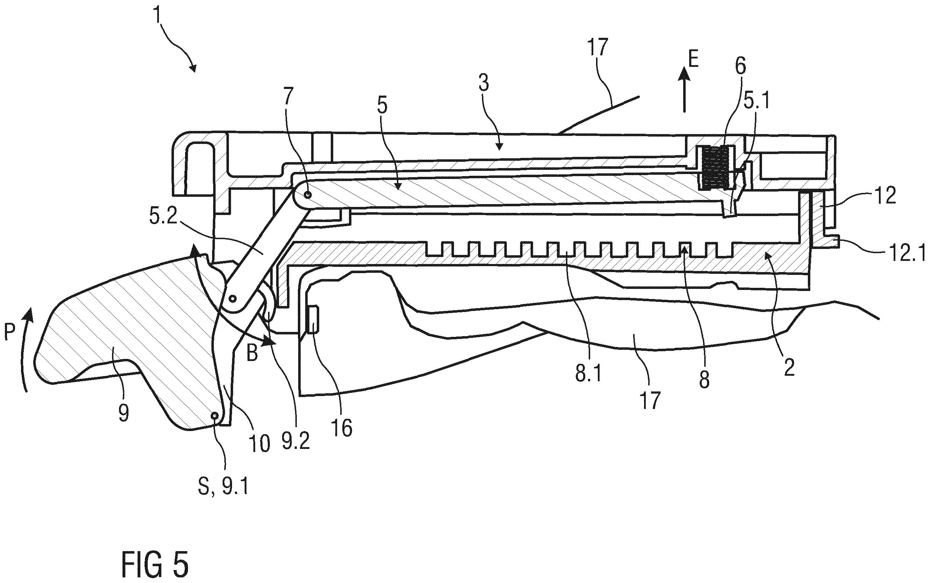

**Figur 5** zeigt schematisch in Schnittdarstellung den Sitztiefenversteller 1 im entriegelten Zustand und noch im eingefahrenen Zustand im Bereich des Entriegelungshebels 5.

Zur Betätigung des Sitztiefenverstellers 1 wird die Betätigungseinheit 9 nach oben gemäß Pfeil P um die Schwenkachse S geschwenkt. Durch die gelenkige Kopplung von Betätigungseinheit 9 und Entriegelungshebel 5 wird bei Betätigung der Betätigungseinheit 9 der Entriegelungshebel 5 um die Achse 7 geschwenkt, denn die Hebelenden 5.2 werden durch die Einwirkung der Betätigungseinheit 9 gemäß Bewegungspfeil B bewegt, so dass das andere Hebelende mit dem Verriegelungszahn 5.1 gemäß Entriegelungsbewegung E nach oben aus der Rastaufnahme 8.1 bewegt wird und der Sitztiefenversteller 1 entriegelt ist.

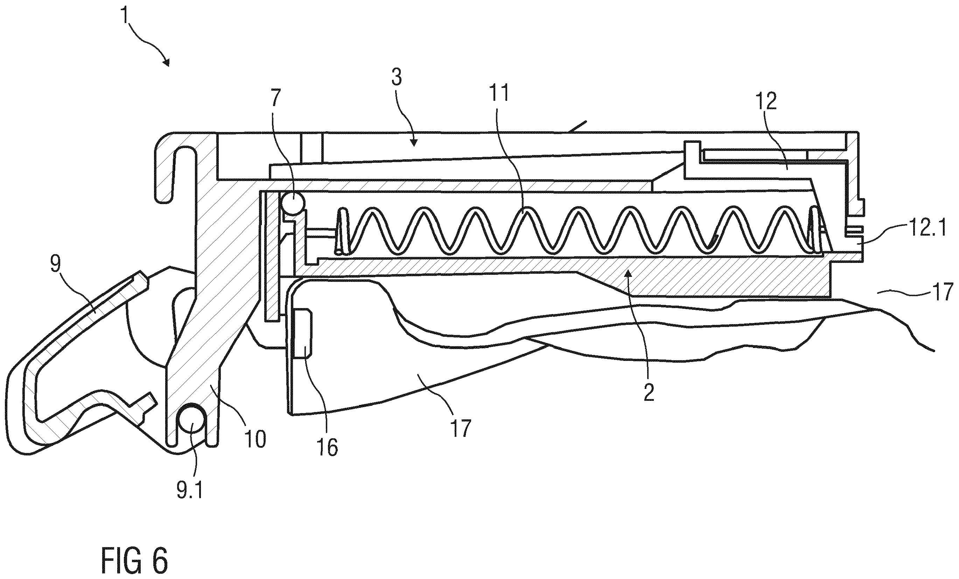

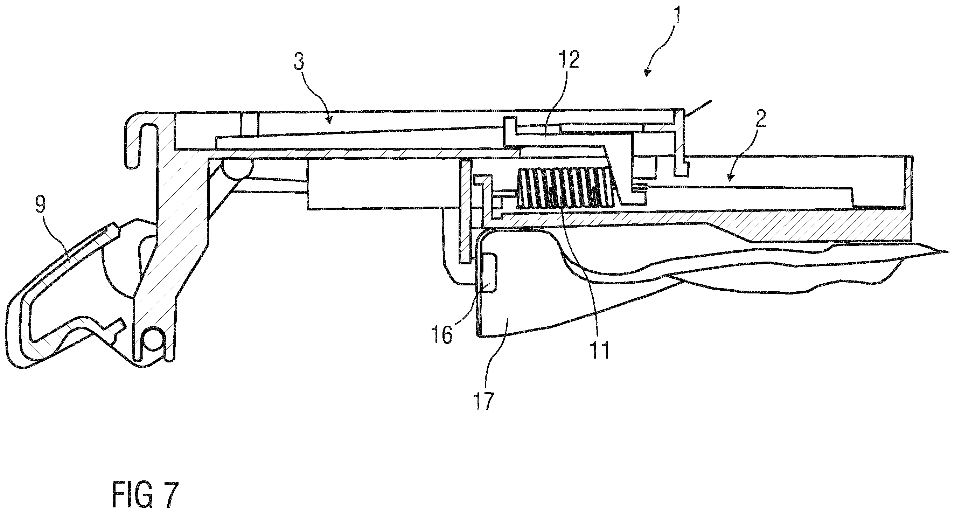

**Figur 6** zeigt schematisch in Schnittdarstellung den Sitztiefenversteller 1 im entriegelten Zustand und noch im eingefahrenen Zustand im Bereich der Antriebseinheit 11. Die Antriebseinheit 11 ist als eine Zugfeder ausgebildet und spannt die Trägerplatte 3 relativ zur Grundplatte 2 im eingefahrenen Zustand vor. Durch Lösen des Entriegelungshebels 5 aus der verriegelten Position wird die Trägerplatte 3 selbsttätig nach vorne in die ausgefahrene Position bewegt, die in Figur 7 dargestellt ist. Hierzu entspannt sich die Zugfeder.

Zur Verriegelung der Trägerplatte 3 in der ausgefahrenen Position in einer der Rastaufnahmen 8.1 wird die Betätigungseinheit 9 gelöst, wodurch der Griff in die Ausgangsposition nach unten gestellt wird und der Entriegelungshebel 5 und dessen Verriegelungszahn 5.1 nach unten in eine der Rastaufnahmen 8.1 der Grundplatte 2 einfällt (analog zur Verriegelung in der eingefahrenen Position, wie in Figur 4 dargestellt).

**Figur 7** zeigt den Sitztiefenversteller 1 im ausgefahrenen Zustand, in welchem die Trägerplatte 3 gegenüber der Grundplatte 2 ausgefahren ist. Dabei ist das Federelement 11.1 entspannt.

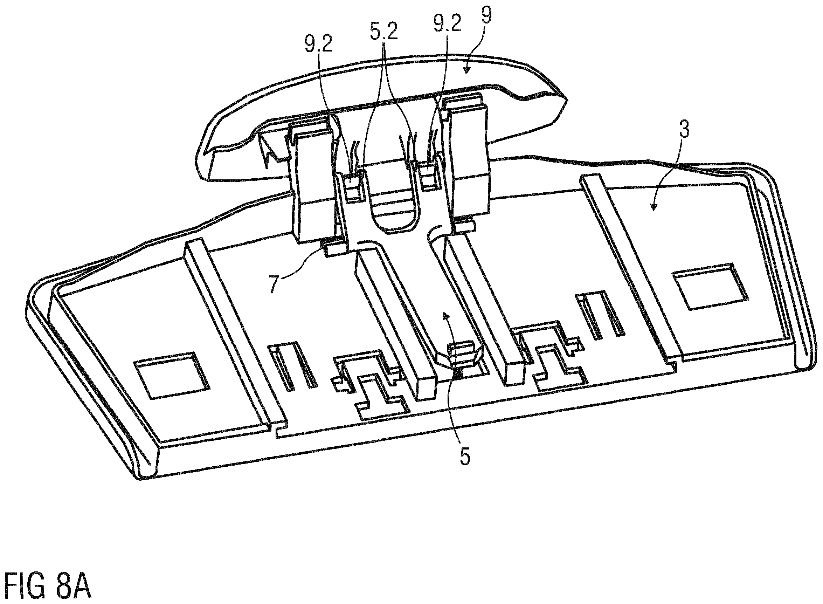

**Figuren 8A bis 8H** zeigen die Montagefolge für einen Sitztiefenversteller 1.

Dabei werden, wie in Figur 8A gezeigt, zunächst die Betätigungseinheit 9 und der Entriegelungshebel 5 an die Trägerplatte 3 (auch Deckel genannt) befestigt.

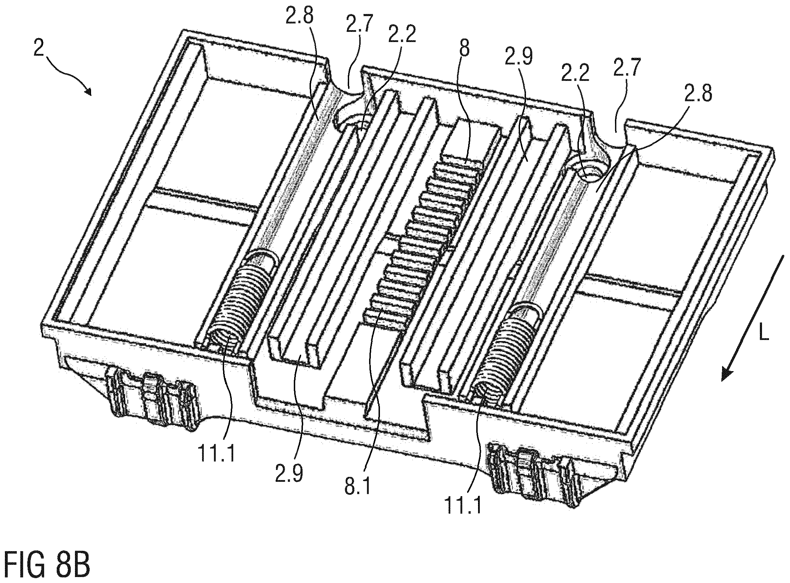

Gemäß Figur 8B werden dann die Federelemente 11.1 in der Grundplatte 2 angeordnet. Hierzu umfasst die Grundplatte 2 zwei entlang einer Längsrichtung, d. h. entlang einer Verschieberichtung L, angeordnete Führungsbahnen 2.8, in welche die Federelemente 11.1 angeordnet sind. Dabei wird ein Federende an der Grundplatte 2 befestigt, beispielsweise eingehakt oder geklipst.

Zur Befestigung der Grundplatte 2 an der Sitzstruktur 17 sind die Durchgangsbohrungen 2.2 anstelle in einer stirnseitigen Wand 2.1, wie in Figuren 1 und 3 dargestellt, im Boden der Grundplatte 2 vorgesehen.

Zwei weitere entlang der Längsrichtung, d. h. entlang der Verschieberichtung L, angeordnete Führungsbahnen 2.9 dienen der Aufnahme der Führungselemente 15.2 der Trägerplatte 3.

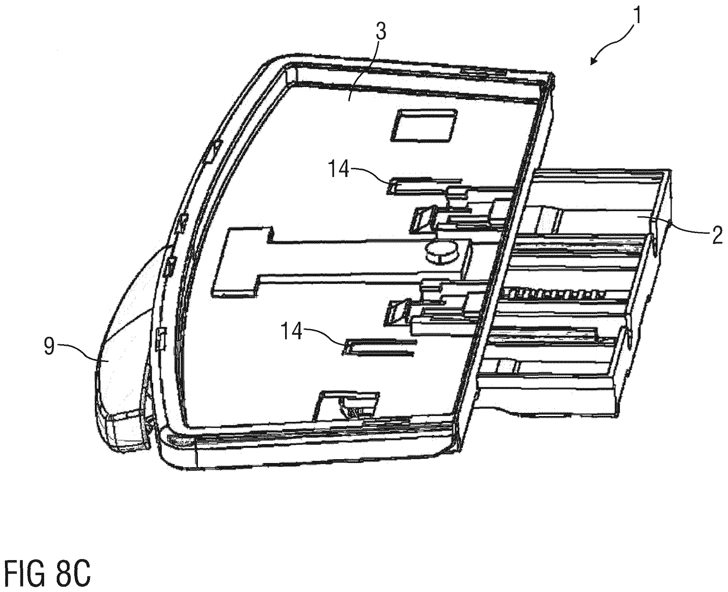

Anschließend wird die Trägerplatte 3 auf die Grundplatte 2 in der ausgefahrenen Position aufgesetzt und teilweise eingefahren, bis die Anschlagarme 14 an der Grundplatte 2 verrasten, wie in Figur 8C gezeigt.

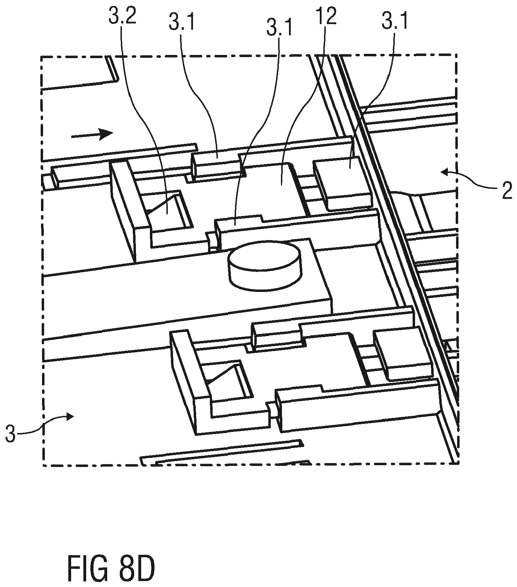

Im nächsten Schritt werden die beiden Schubelemente 12 an der Trägerplatte 3 in ihre Endposition unterhalb der Klemmen 3.1 geschoben und verrastet, wie in Figur 8D gezeigt. Der Anschlag 3.2 ist in dieser Ausführungsform als ein Rastanschlag ausgebildet.

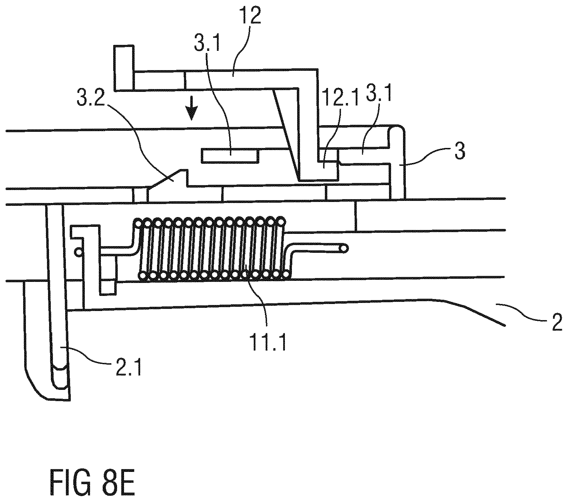

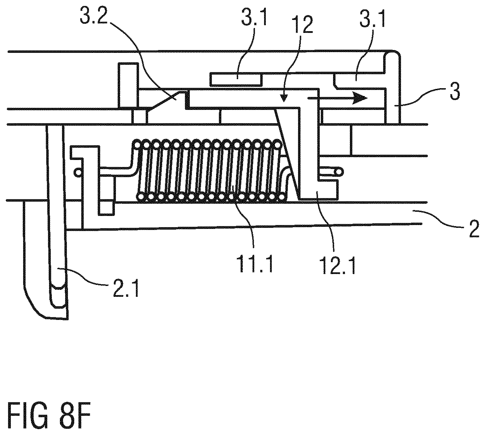

Figur 8E zeigt dabei einen Teilmontageschritt des Schubelements 12, welches zunächst von oben auf die Trägerplatte 3 aufgesetzt wird. Dabei greift der Haken 12.1 in das freie Federende des Federelementes 11.1 ein, wie dies in Figur 8F gezeigt ist.

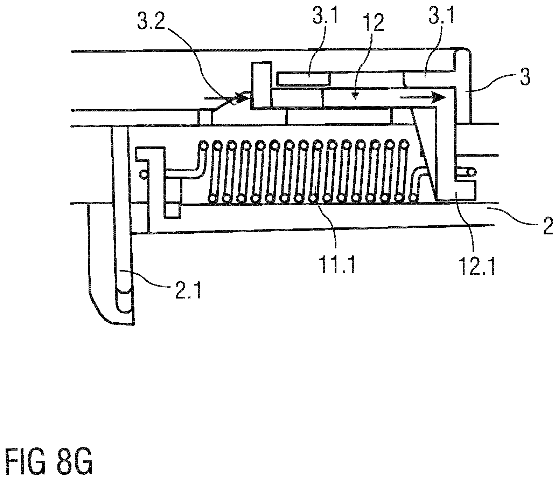

Figur 8G zeigt, wie das Schubelement 12 anschließend relativ zur Trägerplatte 3 in die Endposition geschoben wird, bis das Anschubelement 12 an der Trägerplatte 3 rastend befestigt ist. Durch das Einschieben des Schubelements 12 in seine Endposition wird das Federelement 11.1 teilweise vorgespannt.

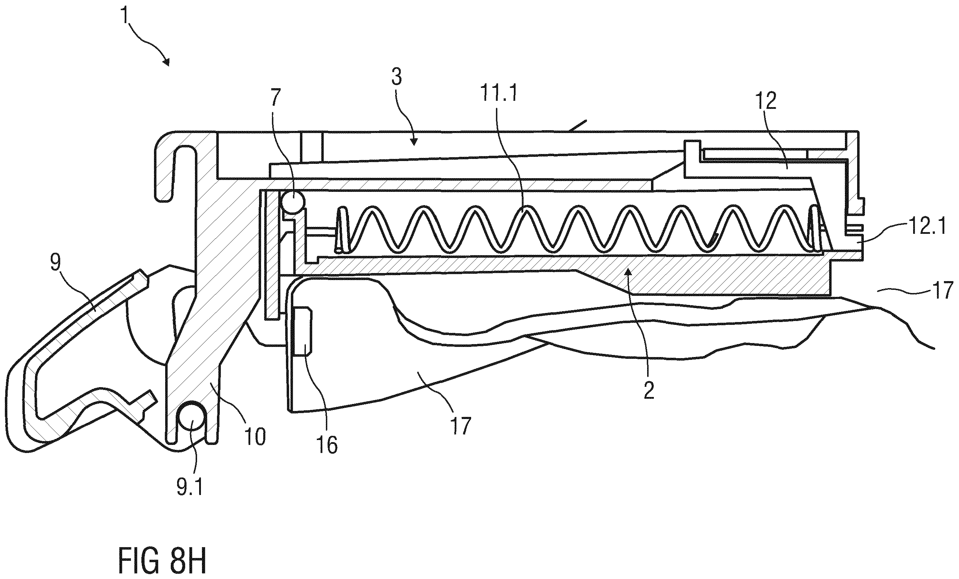

Figur 8H zeigt, wie die Trägerplatte 3 anschließend relativ zur Grundplatte 2 in die eingefahrene Position geschoben wird, wodurch das Federelement 11.1 gespannt wird.

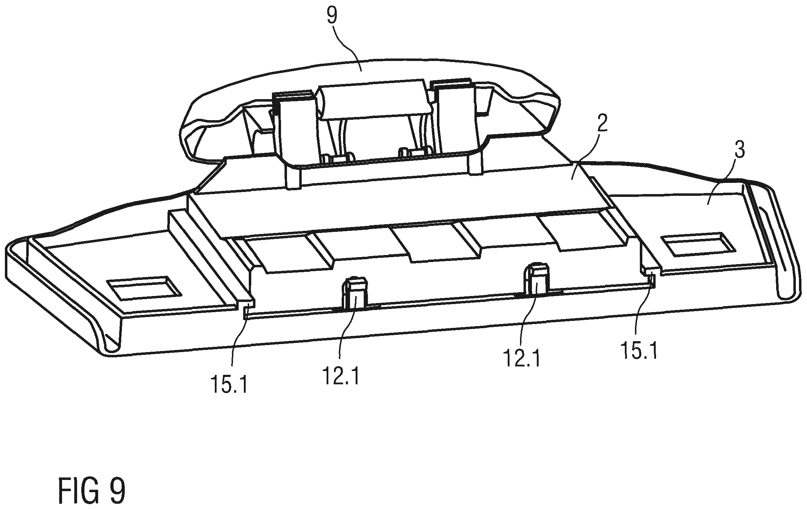

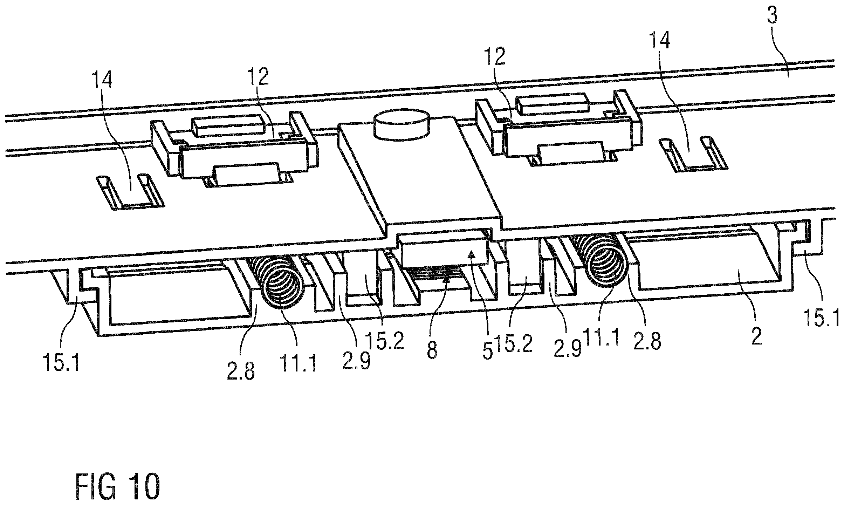

**Figuren 9** **und** **10** zeigen den Sitztiefenversteller 1 im zusammengesetzten Zustand und im eingefahrenen Zustand von Trägerplatte 3 zur Grundplatte 2. Dabei sind die als L-Profile ausgebildeten äußeren Führungselemente 15.1 und die inneren Führungselemente 15.2 zur Führung der Trägerplatte 3 an der Grundplatte 2 vorgesehen.

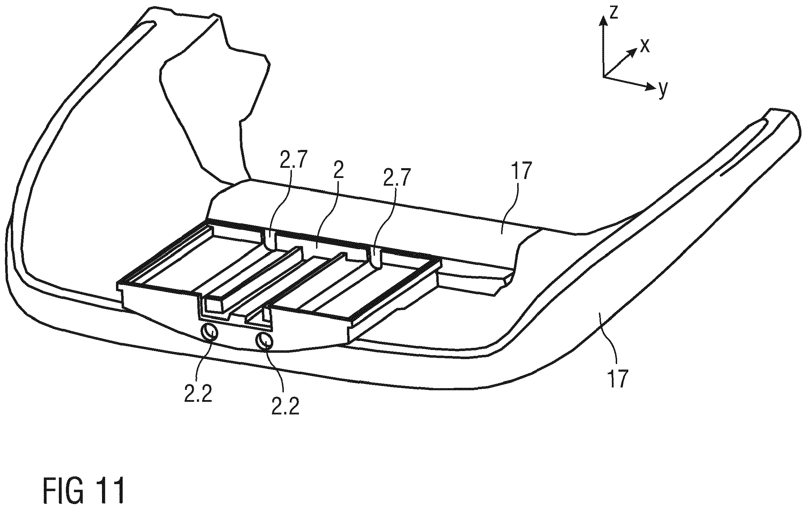

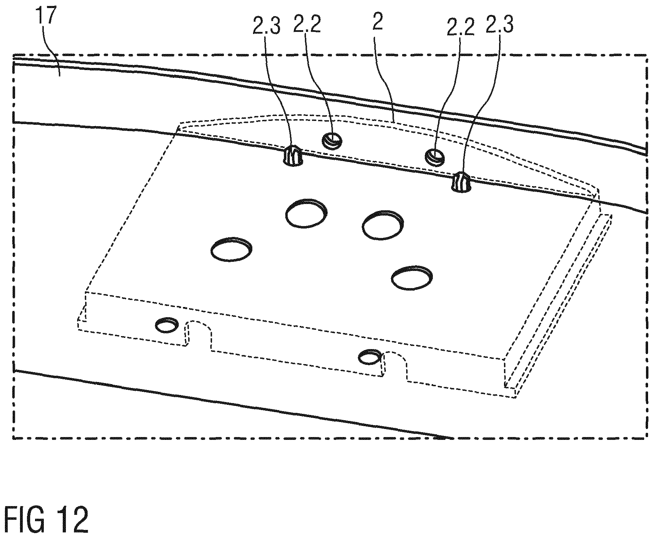

**Figuren 11** **und** **12** zeigen die Grundplatte 2 in einer losen vorpositionierten Stellung, in welcher die Grundplatte 2 über die Dome 2.3 an der Grundplatte 2 vorpositioniert wird. Anschließend wird die Grundplatte 2 mittels Schrauben 16 an der Sitzstruktur 17 befestigt. Dazu wird die Grundplatte 2 in Z-Richtung auf die Sitzstruktur 17, beispielsweise ein Sitzrahmen oder eine Sitzplatte oder -schale, auf die Dome 2.3 aufgesetzt und angeordnet. Hierdurch erfolgt eine Vorzentrierung durch die Dome 2.3.

Anschließend wird die Grundplatte 2 mittels Schrauben 16 mit der Sitzstruktur 17 durch die Durchgangsbohrungen 2.2 verschraubt. Hierdurch wird eine spielfreie Befestigung von Grundplatte 2 und Sitzstruktur 17 ermöglicht. Die Z-Richtung bezieht sich dabei, wie die X-Richtung und Y-Richtung, auf das dargestellte dreidimensionale Koordinatensystem, wobei die Z-Richtung die vertikale Richtung ist und die X-Richtung der Verschieberichtung L entspricht.

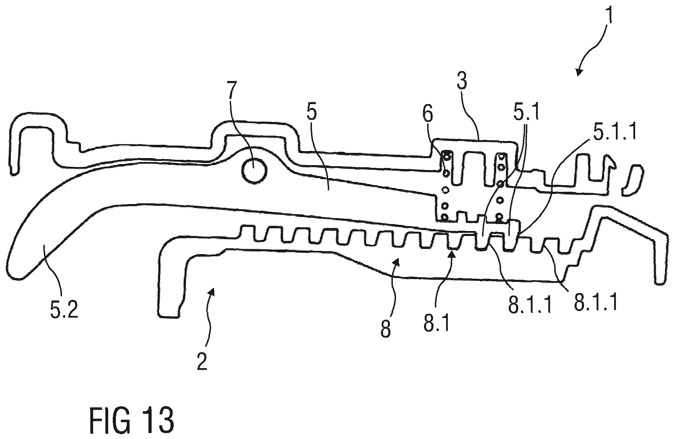

**Figur 13** zeigt eine schematische Darstellung einer weiteren Ausführungsform des Sitztiefenverstellers 1 im verriegelten und teilweise ausgefahrenen Zustand. Der Entriegelungshebel 5 weist das als Druckfeder ausgebildete Rückstellelement 6 auf. Zudem weist der Entriegelungshebel 5 im hier dargestellten Beispiel zwei Verriegelungszähne 5.1 auf. Der jeweilige Verriegelungszahn 5.1 ist in jeweils einer der Rastaufnahmen 8.1 eingerastet. Der Entriegelungshebel 5 ist mittels der Rückstellelemente 6 in der verriegelten Position gehalten.

Durch die hier dargestellte Ausbildung des jeweiligen Verriegelungszahns 5.1 und der Rastaufnahmen 8.1 wird ein optimiertes Verhalten während eines Unfalls, d. h. während einer Kollision des Fahrzeugs mit einem Hindernis, erreicht, insbesondere während einer Heckkollision. Hierzu ist der zumindest eine Verriegelungszahn 5.1 oder sind, wie im hier dargestellten Beispiel die mehreren Verriegelungszähne 5.1, und die Rastaufnahmen 8.1 derart ausgebildet, dass beispielsweise durch eine Kollision, insbesondere durch eine Heckkollision, ein selbsttätiges Entriegeln und ein Einfahren des Sitztiefenverstellers 1, d. h. ein Verschieben der Trägerplatte 3 in die eingefahrene Position, ermöglicht wird, jedoch ausschließlich in die eingefahrene Position. D. h. würde die Trägerplatte 3 in die entgegengesetzte Richtung bewegt, würde der zumindest eine Verriegelungszahn 5.1 oder würden die mehreren Verriegelungszähne 5.1 sofort wieder verrasten.

Da somit beispielsweise während eines Unfalls ein selbsttätiges beabsichtigtes und kontrolliertes Verschieben der Trägerplatte 3 in die eingefahrene Position ermöglicht wird und ein unbeabsichtigtes und unkontrolliertes Verschieben in die ausgefahrene Position verhindert wird, ist ein Verletzungsrisiko reduziert. Der zumindest eine Verriegelungszahn 5.1 oder die mehreren Verriegelungszähne 5.1 sowie die Rastaufnahmen 8.1 weisen somit zweckmäßigerweise eine derartige Verzahnungsgeometrie auf und der Sitztiefenversteller 1 ist zweckmäßigerweise derart ausgebildet, dass insbesondere bei einer Heckkollision aufgrund einer daraus resultierenden definierten Krafteinleitung über den Fahrzeuginsassen das beabsichtigte und kontrollierte selbsttätige Entriegeln und Einfahren des Sitztiefenverstellers 1, d. h. das beabsichtigte und kontrollierte Verschieben der Trägerplatte 3 in die eingefahrene Position, ermöglicht wird.

Eine vorteilhafte Verzahnungsgeometrie, welche dies ermöglicht, ist in Figur 13 gezeigt. Eine rückseitige Zahnflanke 5.1.1 des jeweiligen Verriegelungszahns 5.1 und eine rückseitige Rastaufnahmeflanke 8.1.1 der jeweiligen Rastaufnahmen 8.1 sind angeschrägt ausgebildet, insbesondere korrespondierend zueinander angeschrägt. Die Anschrägungen sind derart ausgebildet, dass der jeweilige Verriegelungszahn 5.1 bei einer entsprechenden Krafteinwirkung auf die Trägerplatte 3 in Einfahrrichtung, d. h. in Verschieberichtung L in Richtung der eingefahrenen Position, über die Anschrägungen, d. h. über die korrespondierend angeschrägten Flanken 5.1.1, 8.1.1, entgegen der Rückstellkrafteinwirkung des Rückstellelementes 6 aus der jeweiligen Rastaufnahme 8.1 herausgedrückt wird, so dass der Sitzversteller 1 entriegelt ist und sich die Trägerplatte 3 aufgrund der Krafteinwirkung in die eingefahrene Position bewegt.

Um dies zu ermöglichen, sind die rückseitigen Rastaufnahmeflanken 8.1.1 der Rastaufnahmen 8.1, d. h. die in Richtung der eingefahrenen Position weisenden Rastaufnahmeflanken 8.1.1, derart angeschrägt, dass ein Öffnungsquerschnitt der Rastaufnahmen 8.1 sich ausgehend von einem jeweiligen Rastaufnahmeboden zu einer jeweiligen Rastaufnahmeoberseite zunehmend vergrößert. D. h. die rückseitigen Rastaufnahmeflanken sind, ausgehend vom Rastaufnahmeboden, nach hinten, in Richtung der eingefahrenen Position, geneigt. Die rückseitigen Verriegelungszahnflanken 5.1.1 sind dazu korrespondierend geneigt, d. h. die jeweilige rückseitige Verriegelungszahnflanke 5.1.1 ist derart geneigt, dass sich ein jeweiliger Verriegelungszahnquerschnitt ausgehend von einem dem jeweiligen Rastaufnahmeboden zugewandten Verriegelungszahnboden nach oben, d. h. in Richtung des Entriegelungshebels 5, zunehmend vergrößert.

### Bezugszeichenliste

- 1: Sitztiefenversteller
- 2: Grundplatte
- 2.1: Wand
- 2.2: Durchgangsbohrungen
- 2.3: Dome
- 2.4: Unterseite
- 2.5: Oberseite
- 2.6: Rand
- 2.7: Aussparungen
- 2.8: Führungsbahnen
- 2.9: Führungsbahnen
- 3: Trägerplatte
- 3.1: Klemmen
- 3.2: Anschlag
- 3.3: Ausnehmungen
- 4: Verriegelungseinheit
- 5: Entriegelungshebel
- 5.1: Verriegelungszahn
- 5.1.1: Zahnflanke
- 5.2: Hebelenden
- 6: Rückstellelement
- 7: Achse
- 8: Rasteinheit
- 8.1: Rastaufnahme
- 8.1.1: Rastaufnahmeflanke
- 8.2: Verrippung
- 9: Betätigungseinheit
- 9.1: Zapfen
- 9.2: Arme
- 10: Lagerung
- 11: Antriebseinheit
- 11.1: Federelement
- 12: Schubelement
- 12.1: Haken
- 13: Rand
- 14: Anschlagarme
- 15: Führungselemente
- 15.1: äußere Führungselemente
- 15.2: innere Führungselemente
- 16: Schrauben
- 17: Sitzstruktur
- 18: Rippenstruktur

- B: Bewegungspfeil
- E: Entriegelungsbewegung
- P: Pfeil
- S: Schwenkachse
- L: Verschieberichtung

## Patentansprüche

1. Sitztiefenversteller (1) für einen Fahrzeugsitz, umfassend
- eine mit einer Sitzstruktur (17) des Fahrzeugsitzes verbindbare Grundplatte (2) mit einer Rasteinheit (8),
- eine oberhalb der Grundplatte (2) angeordnete und relativ zur Grundplatte (2) verschiebbare Trägerplatte (3),
- eine in der Rasteinheit (8) lösbar rastende Verriegelungseinheit (4) und
- eine in Verschieberichtung (L) auf die Trägerplatte (3) wirkende Antriebseinheit (11),
wobei die Trägerplatte (3) in einer Raststellung der Verriegelungseinheit (4) zur Grundplatte (2) fixiert und in einer Losestellung der Verriegelungseinheit (4) zwischen einer eingefahrenen Position und einer ausgefahrenen Position verschiebbar ist und die Antriebseinheit (11) in der Losestellung der Verriegelungseinheit (4) eine Verschiebung der Trägerplatte (3) in die ausgefahrene Position bewirkt, und wobei die Rasteinheit (8) in Verschieberichtung (L) versetzte Rastaufnahmen (8.1) aufweist und die Verriegelungseinheit (4) einen Entriegelungshebel (5) mit mindestens einem Verriegelungszahn (5.1) aufweist, der in der Raststellung rastend in eine der Rastaufnahmen (8.1) eingreift,
**dadurch gekennzeichnet, dass** die Rasteinheit (8) auf der der Trägerplatte (3) zugewandten Oberseite (2.5) der Grundplatte (2) angeordnet ist, wobei die Rastaufnahmen (8.1) nach oben geöffnet sind und der zumindest eine Verriegelungszahn (5.1) nach unten ausgerichtet ist, wobei der zumindest eine Verriegelungszahn (5.1) derart am Entriegelungshebel (5) angeordnet ist, dass ein freies Ende des zumindest einen Verriegelungszahns (5.1) unterhalb dem anderen, gegenüberliegenden Endbereich des Verriegelungszahns (5.1) angeordnet ist, mit welchem der Verriegelungszahn (5.1) am Entriegelungshebel (5) angeordnet oder ausgebildet ist, und wobei der zumindest eine Verriegelungszahn (5.1) zum Entriegeln nach oben aus der jeweiligen Rastaufnahme (8.1) herausbewegbar und zum Verriegeln nach unten in die jeweilige Rastaufnahme (8.1) hineinbewegbar ist.

2. Sitztiefenversteller (1) nach Anspruch 1, **gekennzeichnet durch** zumindest ein Rückstellelement (6), das auf die Verriegelungseinheit (4) zur Raststellung hin einwirkt.

3. Sitztiefenversteller (1) nach einem der vorhergehenden Ansprüche, **dadurch gekennzeichnet, dass** der Entriegelungshebel (5) mit einer gelenkig gekoppelten Betätigungseinheit (9) zwischen der Raststellung und der Losestellung bewegbar ist.

4. Sitztiefenversteller (1) nach Anspruch 3,
**dadurch gekennzeichnet, dass** die Betätigungseinheit (9) und der Entriegelungshebel (5) derart ausgebildet und angeordnet sind, dass die Betätigungseinheit (9) zum Bewegen des Entriegelungshebels (5) auf einen vom zumindest einen Verriegelungszahn (5.1) abgewandten Endbereich des Entriegelungshebels (5) einwirkt.

5. Sitztiefenversteller (1) nach einem der vorhergehenden Ansprüche, **dadurch gekennzeichnet, dass** der Entriegelungshebel (5) um eine Achse (7) schwenkbar gelagert ist.

6. Sitztiefenversteller (1) nach einem der vorhergehenden Ansprüche, **dadurch gekennzeichnet, dass** die Antriebseinheit (11) mindestens ein Federelement (11.1) umfasst, das zwischen der Grundplatte (2) und der Trägerplatte (3) gespannt ist.

7. Sitztiefenversteller (1) nach Anspruch 6, **dadurch gekennzeichnet, dass** das zumindest eine Federelement (11.1) als Zugfeder oder als Druckfeder ausgebildet ist.

8. Sitztiefenversteller (1) nach einem der vorhergehenden Ansprüche,
**dadurch gekennzeichnet, dass** die Grundplatte (2) Durchgangsbohrungen (2.2) zur Aufnahme von Befestigungselementen (16) zur Fixierung der Grundplatte (2) an der Sitzstruktur (17) sowie auf der Unterseite (2.4) vertikal abstehende Dome (2.3) aufweist.

## Claims

1. Seat depth adjuster (1) for a vehicle seat, comprising
- a base plate (2) which is connectable to a seat structure (17) of the vehicle seat and which comprises a latching unit (8),
- a carrier plate (3) which is arranged above the base plate (2) and which is displaceable relative to the base plate (2),
- a locking unit (4) which is releasably latched in the latching unit (8), and
- a drive unit (11) which acts on the carrier plate (3) in the direction of displacement (L),
wherein the carrier plate (3) is fixed relative to the base plate (2) in a latched position of the locking unit (4) and is displaceable between a retracted position and an extended position in a released position of the locking unit (4) and the drive unit (11) causes a displacement of the carrier plate (3) into the extended position, in the released position of the locking unit (4), and wherein the latching unit (8) comprises latching receivers (8.1) which are offset in the direction of displacement (L) and the locking unit (4) comprises an unlocking lever (5) with at least one locking tooth (5.1) which engages in one of the latching receivers (8.1) in a latched manner in the latched position,
**characterized in that** the latching unit (8) is arranged on the upper face (2.5) of the base plate (2) facing the carrier plate (3), the latching receivers (8.1) are open upwardly and the at least one locking tooth (5.1) is oriented downwardly, wherein the at least one locking tooth (5.1) is arranged on the unlocking lever (5) such that a free end of the at least one locking tooth (5.1) is arranged below the other opposing end region of the locking tooth (5.1), by which the locking tooth (5.1) is arranged or configured on the unlocking lever (5), and wherein the at least one locking tooth (5.1) for unlocking is movable upwardly out of the respective latching receiver (8.1) and for locking is movable downwardly into the respective latching receiver (8.1).

2. Seat depth adjuster (1) according to Claim 1, **characterized by** at least one restoring element (6) which acts on the locking unit (4) toward the latched position.

3. Seat depth adjuster (1) according to either of the preceding claims, **characterized in that** the unlocking lever (5) with an actuating unit (9), which is coupled in an articulated manner, is movable between the latched position and the released position.

4. Seat depth adjuster (1) according to Claim 3, **characterized in that** the actuating unit (9) and the unlocking lever (5) are configured and arranged such that for moving the unlocking lever (5) the actuating unit (9) acts on an end region of the unlocking lever (5) facing away from at least one locking tooth (5.1).

5. Seat depth adjuster (1) according to one of the preceding claims, **characterized in that** the unlocking lever (5) is pivotably mounted about an axle (7).

6. Seat depth adjuster (1) according to one of the preceding claims, **characterized in that** the drive unit (11) comprises at least one spring element (11.1) which is tensioned between the base plate (2) and the carrier plate (3).

7. Seat depth adjuster (1) according to Claim 6, **characterized in that** the at least one spring element (11.1) is configured as a tension spring or as a compression spring.

8. Seat depth adjuster (1) according to one of the preceding claims, **characterized in that** the base plate (2) comprises through-bores (2.2), for receiving fastening elements (16) for fixing the base plate (2) to the seat structure (17), and domes (2.3) which protrude vertically from the lower face (2.4).

## Revendications

1. Dispositif de réglage de la profondeur (1) d'un siège de véhicule, comportant
- une plaque de base (2) pouvant être reliée à une structure (17) du siège de véhicule et dotée d'une unité d'encliquetage (8),
- une plaque de support (3) disposée au-dessus de la plaque de base (2) et déplaçable par rapport à la plaque de base (2),
- une unité de verrouillage (4) s'encliquetant de manière amovible dans l'unité d'encliquetage (8) et
- une unité d'entraînement (11) agissant sur la plaque de support (3) dans la direction de déplacement (L),
la plaque de support (3) étant fixée par rapport à la plaque de base (2) dans une position d'encliquetage de l'unité de verrouillage (4) et étant déplaçable entre une position rentrée et une position sortie dans une position de déblocage de l'unité de verrouillage (4) et l'unité d'entraînement (11) provoquant un déplacement de la plaque de support (3) dans la position sortie, dans la position de déblocage de l'unité de verrouillage (4), et l'unité d'encliquetage (8) comprenant des logements d'encliquetage (8.1) décalés dans la direction de déplacement (L) et l'unité de verrouillage (4) comprenant un levier de déverrouillage (5) doté d'au moins une dent de verrouillage (5.1) qui vient en prise par encliquetage dans l'un des logements d'encliquetage (8.1) dans la position d'encliquetage,
**caractérisé en ce que** l'unité d'encliquetage (8) est disposée sur le côté supérieur (2.5) de la plaque de base (2) tourné vers la plaque de support (3), les logements d'encliquetage (8.1) étant ouverts vers le haut et ladite au moins une dent de verrouillage (5.1) étant orientée vers le bas, ladite au moins une dent de verrouillage (5.1) étant disposée sur le levier de déverrouillage (5) de telle sorte qu'une extrémité libre de ladite au moins une dent de verrouillage (5.1) soit disposée en dessous de l'autre région d'extrémité, opposée de la dent de verrouillage (5.1), par laquelle la dent de verrouillage (5.1) est disposée ou conçu sur le levier de déverrouillage (5), et ladite au moins une dent de verrouillage (5.1) pouvant être déplacée vers le haut hors du logement d'encliquetage (8.1) respectif pour le déverrouillage et pouvant être déplacée vers le bas dans le logement d'encliquetage (8.1) respectif pour le verrouillage.

2. Dispositif de réglage de la profondeur d'un siège (1) selon la revendication 1, **caractérisé par** au moins un élément de rappel (6) qui agit sur l'unité de verrouillage (4) en direction de la position d'encliquetage.

3. Dispositif de réglage de la profondeur d'un siège (1) selon l'une des revendications précédentes, **caractérisé en ce que** le levier de déverrouillage (5) est déplaçable entre la position d'encliquetage et la position de déblocage à l'aide d'une unité d'actionnement (9) accouplée de manière articulée.

4. Dispositif de réglage de la profondeur d'un siège (1) selon la revendication 3,
**caractérisé en ce que** l'unité d'actionnement (9) et le levier de déverrouillage (5) sont conçus et disposés de telle sorte que l'unité d'actionnement (9) agit sur une région d'extrémité du levier de déverrouillage (5) détournée de'l au moins une dent de verrouillage (5.1) pour le déplacement du levier de déverrouillage (5).

5. Dispositif de réglage de la profondeur d'un siège (1) selon l'une des revendications précédentes, **caractérisé en ce que** le levier de déverrouillage (5) est monté pivotant autour d'un axe (7).

6. Dispositif de réglage de la profondeur d'un siège (1) selon l'une des revendications précédentes, **caractérisé en ce que** l'unité d'entraînement (11) comporte au moins un élément ressort (11.1) qui est tendu entre la plaque de base (2) et la plaque de support (3).

7. Dispositif de réglage de la profondeur d'un siège (1) selon la revendication 6,
**caractérisé en ce que** ledit au moins un élément ressort (11.1) est réalisé en tant que ressort de traction ou ressort de compression.

8. Dispositif de réglage de la profondeur d'un siège (1) selon l'une des revendications précédentes, **caractérisé en ce que** la plaque de base (2) comprend des alésages traversants (2.2) pour la réception d'éléments de fixation (16) pour la fixation de la plaque de base (2) sur la structure de siège (17) ainsi que des dômes (2.3) faisant saillie verticalement sur le côté inférieur (2.4).
